Europäisches Patentamt

European Patent Office

Office européen des brevets

(11) Numéro de publication : **0 351 775 B1**

(12)

# FASCICULE DE BREVET EUROPEEN

(45) Date de publication du fascicule du brevet :
**10.03.93 Bulletin 93/10**

(51) Int. Cl.$^5$ : **H01F 1/11, // G11B5/706**

(21) Numéro de dépôt : **89113147.6**

(22) Date de dépôt : **18.07.89**

(54) **Procédé de fabrication d'une poudre magnétique d'hexaferrite de strontium.**

(30) Priorité : **22.07.88 FR 8809968**

(43) Date de publication de la demande :
**24.01.90 Bulletin 90/04**

(45) Mention de la délivrance du brevet :
**10.03.93 Bulletin 93/10**

(84) Etats contractants désignés :
**AT BE CH DE ES FR GB IT LI NL SE**

(56) Documents cités :
**EP-A- 0 164 533**
**US-A- 3 810 973**
**FERRITES - PROCEEDINGS OF THE ICF 3,**
**PROCEEDINGS OF THE INTERNATIONAL**
**CONFERENCE, septembre-octobre 1980,**
**pages 265-271, Center for Academic Publica-**
**tions Japan/Tokyo, D. Reidel Publishing Co.,**
**Dordrecht, NL; P.F. BONGERS et al.: "Defects,**
**grain boundary segregation, and secondary**
**phases of Ferrites in relation to the magnetic**
**properties"**

(73) Titulaire : **COMPAGNIE GENERALE**
**D'AUTOMATISME CGA-HBS**
**12, rue de la Baume**
**F-75008 Paris (FR)**

(72) Inventeur : **Moisand, Jean-Claude**
**32, rue Baudin**
**F-78390 Bois d'Arcy (FR)**
Inventeur : **Cumer, Joseph**
**25, avenue des Causses**
**F-91940 Les Ulis (FR)**
Inventeur : **Poix, Paul**
**61, rue de Lorraine**
**F-67380 Lingolsheim (FR)**
Inventeur : **Bernier, Jean-Claude**
**11, rue de Lorraine**
**F-67380 Lingolsheim (FR)**

(74) Mandataire : **Weinmiller, Jürgen et al**
**Lennéstrasse 9 Postfach 24**
**W-8133 Feldafing (DE)**

Jouve, 18, rue Saint-Denis, 75001 PARIS

## Description

La présente invention concerne un procédé de fabrication d'une poudre magnétique d'hexaferrite de strontium de formule générale xSrO, 6 Fe$_2$O$_3$, dans laquelle x est compris entre 1,3 et 1,4, par réaction d'une solution aqueuse de chlorure ferrique sur du fer divisé et une suspension de carbonate de strontium dans une solution de carbonate alcalin.

L'hexaferrite de strontium est un composé magnétique, pouvant être utilisé dans la fabrication d'encres destinées à être disposées sur un support pour réaliser une piste magnétique. Ce composé a fait l'objet de la demande de brevet français n° 8708197 du 12 juin 1987 de la demanderesse. En poudre de pureté élevée, d'au moins 98% et de granulométrie moyenne inférieure ou égale à 10 nanomètres, il présente un champ coercitif égal ou supérieur à 5000 oersteds, avec une aimentation spécifique supérieure à 60 unités électromagnétiques CGS par gramme à 20° C.

On a déjà proposé de le fabriquer par calcination à haute températeure, supérieure à 1200°C, d'un mélange d'oxyde ferrique (Fe$_2$O$_3$) alpha et de carbonate de strontium. Cependant l'homogénéisation du produit est difficile, on obtient une poudre à granulométrie grossière, et l'on ne peut obtenir de produit de champ coercitif dépassant 4000 oersteds.

Il a également été proposé d'effectuer cette fabrication par voie humide, en faisant réagir une solution aqueuse de chlorure ferrique sur du fer divisé et une suspension de carbonate de strontium dans une solution de carbonate alcalin, jouant le rôle d'agent précipitant. On n'avait cependant réussi à obtenir un rendement convenable en hexaferrite de strontium qu'en employant des quantités d'agent précipitant de 3 à 4 fois la quantité théorique, ce qui compliquait l'opération de lavage du précipité et amenait à des rejets très importants de carbonate alcalin résiduaire.

La présente invention a pour but de procurer un procédé de fabrication d'hexaferrite de strontium qui donne un produit pur, de champ coercitif et d'aimantation spécifique élevés, d'au moins 5000 oersteds et 60 unités électromagnétiques CGS respectivement, en poudre très fine, avec un bon rendement, avec une durée totale des opérations relativement courte et une quantité de carbonate alcalin résiduaire peu élevée.

Le procédé selon l'invention est caractérisé en ce que l'on met en présence à chaud sous agitation une solution de chlorure ferrique et une suspension de carbonate de strontium dans une solution de carbonate alcalin, en ce que l'on dissout du fer divisé dans le mélange obtenu, en ce que l'on maintient la solution obtenue au voisinage de l'ébullition jusqu'à précipitation complète de l'hexaferrite de strontium, en ce que l'on filtre à chaud la solution, lave le précipité recueilli, et le soumet à des opérations de séchage, de broyage et de traitement thermique pendant plusieurs heures à environ 850°C.

Il répond en outre de préférence à au moins l'une des caractéristiques suivantes :
- Après le lavage du précipité filtré, on le soumet à un traitement thermique à 850°C ± 5°C pendant 8 à 10 heures, puis le broie.
- Après le lavage du précipité filtré, on le soumet à un séchage à environ 120°C, broie le gâteau séché, puis le soumet à un traitement thermique à 850°C± 5°C pendant environ 6 heures.
- Le carbonate alcalin est du carbonate de potassium.
- On introduit la solution de chlorure ferrique dans le fond d'un récipient contenant la suspension de carbonate de strontium dans la solution de carbonate alcalin, en ralentissant la vitesse d'introduction lorsque la majeure partie de la solution de chlorure ferrique a été introduite.
- On effectue des lavages successifs à l'eau distillée du précipité filtré.
- Les proportions de chlorure ferrique et de fer divisé de départ sont telles que le rapport molaire Fe$^{3+}$/Fe$^{2+}$ dans la solution obtenue soit compris entre 1 et 2.
- Les proportions de chlorure ferrique, de fer et de carbonate alcalin sont telles que le rapport molaire Fe$^{3+}$/Sr$^{2+}$ dans la solution obtenue soit compris entre 9 et 10.
- Les proportions de carbonate alcalin, de chlorure ferrique et de fer sont telles que le carbonate alcalin soit en excès de 10% à 20% par rapport à la quantité stoechiométrique .

Il est décrit ci-après à titre d'exemples la fabrication de poudre fine d'hexaferrite de strontium selon deux variantes du procédé de l'invention, les premières phases de ces deux variantes étant identiques.

On prépare une solution de carbonate de potassium par dissolution de 2638 g, soit 19, 12 moles (correspondant à un excès de 20%) de carbonate de potassium cristallisé en poudre dans 5 litres d'eau distillée. Cette dissolution est exothermique. Une solution de carbonate de sodium pourrait également convenir, mais ce dernier est beaucoup moins soluble que le carbonate de potassium dans l'eau, même à 100°C, et les ions Na$^+$ présentent une aptitude plus élevée à se fixer sur les oxydes de fer, ce qui rendrait plus difficile le lavage du produit précipité et filtré.

On dissout sous forte agitation 2870 g, soit 10,62 moles, de chlorure ferrique hydraté (FeCl$_3$, 6H$_2$O) dans 5 litres d'eau distillée.

2

On prépare un lait de carbonate de strontium en dispersant dans 5 litres d'eau distillée 207 g, soit 1,4 mole, de carbonate de strontium cristallisé en poudre sous forte agitation, de manière à éviter la présence de blocs de carbonate de strontium solide dont la dissolution est lente. Une agitation de 15 à 20 minutes est largement suffisante. On verse sous forte agitation cette dispersion de carbonate de strontium dans la solution de chlorure ferrique. Si le carbonate de strontium a été bien dispersé, la dissolution est rapide (quelques minutes) et s'accompagne d'un dégagement d'anhydride carbonique. La solution obtenue peut être légèrement trouble.

On dissout ensuite 77 g, soit 1,38 mole, de fer métallique (en copeaux ou de préférence en poudre) dans la solution précédente sous forte agitation, de préférence tout en élevant la température du mélange à 80°C à 100°C. Le fer se dissout en réagissant sur le chlorure ferrique conformément à la réaction

$$8 \ FeCl_3 + Fe° \rightarrow 6 \ FeCl_3 \rightarrow 3 \ FeCl_2$$

On effectue alors la précipitation d'oxyde de fer magnétique hydraté selon la réaction

$$6 \ FeCl_3 + 3 \ FeCl_2 + 12 \ K_2CO_3 \rightarrow Fe_3O_4, \ xH_2O + 24 \ KCl$$

A cet effet, les deux solutions, solution ferrique et solution alcaline de carbonate de potassium, étant portées à 800 à 100°C, on introduit la solution ferrique dans la solution alcaline, au fond d'un ballon de 20 litres contenant la solution ferrique, sous forte agitation. Ce mode d'introduction a pour but d'éviter la formation de mousse, qui apparaîtrait si l'introduction se faisait autrement. En effet, dans ces conditions le dégagement d'anhydride carbonique est contrôlé par l'excès de carbonate alcalin présent au début de la précipitation, par formation de bicarbonate alcalin, selon la réaction

$$H_2O + K_2CO_3 + CO_2 \rightarrow 2 \ KHCO_3$$

Par ailleurs, toujours pour éviter la formation de mousse, encore plus difficile à éviter en fin d'opération, il est bon d'introduire rapidement la solution ferrique jusqu'à ce que 80% de cette solution aient été ajoutés, puis pour les 20% restants de ralentir la vitesse d'introduction.

En pratique, une opération de précipitation complète de l'oxyde magnétique peut être réalisée en 15 à 20 minutes.

On assure alors la maturation du précipité en maintenant la solution le contenant pendant 20 minutes au voisinage de l'ébullition. Cette opération a deux rôles essentiels
- achever la déshydratation des hydroxydes
- faire grossir les grains d'oxyde magnétique cristallisé.

Le but de cette opération est de permettre une filtration rapide.

La filtration doit s'effectuer à chaud, par exemple sur fiole Büchner ou au filtre-presse. Le gâteau obtenu est noir. Il contient outre le précipité des quantités importantes de chlorure de potassium, d'eau et de solution alcaline. On effectue trois lavages à l'eau bouillante, à l'aide d'environ 25 litres d'eau distillée. Le gâteau après lavage contient 4 à 5 fois son poids d'eau.

Le contrôle de la fin du lavage se fait au moyen d'un papier indicateur de pH ou mieux d'un pH mètre. Les ions chlore sont détectés par une solution de nitrate d'argent. Dès que le pH est voisin de 7 et que l'essai au nitrate d'argent est négatif (on peut tolérer un très faible trouble), le lavage est achevé.

C'est à la suite du lavage du précipité que les opérations selon les deux variantes du procédé divergent.

Selon la première variante, on soumet directement le précipité lavé à un traitement thermique à 850° C± 5°C. pendant 8 à 10 heures dans un four à atmosphère normale, le gâteau lavé étant simplement cassé en morceaux à la main avant d'être introduit dans le four.

Le produit sorti du four et refroidi est alors soumis à un broyage pour l'homogénéiser, l'oxyde ferrique et le carbonate de strontium n'étant que partiellement mélangés, le degré d'homogénéisation n'excédant pas 80%. Ce broyage s'effectue à sec, de préférence dans un broyeur rotatif à rouleaux et à billes d'acier, dans une cuve de porcelaine. Une durée de broyage de 6 heures est suffisante pour obtenir un produit bien homogène.

Le produit fini peut être soumis à des opérations de contrôle de sa qualité, notamment au contrôle de sa granulométrie, par exemple au microscope électronique à balayage, et à celui de ses propriétés magnétiques, champ coercitif et aimantations spécifiques initiale et rémanente.

Selon la seconde variante, le précipité lavé est d'abord soumis à un séchage entre 120°C et 150°C dans une étuve ventilée. Au cours du séchage, l'oxyde magnétique microcristallisé s'oxyde en oxyde ferrique gamma, et le précipité initialement noir devient rouge. Le produit séché peut contenir encore environ 6% d'eau en poids.

Le gâteau séché est alors soumis pendant environ 12 heures à un broyage d'homogénéisation du mélange contenu dans le précipité. Ce broyage permet de diminuer la durée du traitement thermique ultérieur et de diminuer la température de recuit et les hétérogénéités locales.

Le broyage est effectué comme indiqué précédemment à propos de la première variante, à sec, de préférence dans un broyeur rotatif à rouleaux et à billes d'acier, à cuve de porcelaine.

Le produit broyé est alors soumis à un traitement thermique à l'air à une température de 850°C ± 5°C, de préférence pendant 6 heures.

Le produit fini peut subir alors des opérations de contrôle de sa qualité, comme indiqué précédemment.

On a préparé selon le mode opératoire de la seconde variante définie ci-dessus deux lots d'hexaferrite de strontium, correspondant à la formule 1,4 SrO, 6 Fe$_2$O$_3$ (lot 1), l'autre à la formule 1,35 SrO, 6 Fe$_2$O$_3$ (lot 2) tous deux avec un traitement thermique de 3 heures à 850°C. Les propriétés obtenues ont été les suivantes

| | LOT 1 | LOT 2 |
|---|---|---|
| Aimantations Ts | 62,8 | 64,08 |
| spécifiques Tr (uém.CGS/g) | 34 | 34,4 |
| Champ coercitif Hc (oersteds) | 5450 | 5300 |
| Surface spécifique (m$^2$/g) | 9,53 | 7,52 |
| Granulométrie 50% < | 6,90 | 7,99 |
| (microns) 90% < | 15,99 | 17,50 |

On obtient des produits présentant des propriétés mécaniques et magnétiques un peu meilleures que celles indiquées ci-dessus en suivant le mode opératoire de la première variante. Celle-ci permet en outre de réduire la durée de la fabrication, de supprimer la phase de séchage et de réduire de moitié le temps de broyage. La fabrication est en outre plus aisément reproductible.

**Revendications**

1. Procédé de fabrication d'une poudre magnétique d'hexaferrite de strontium de formule générale xSrO, 6 Fe$_2$O$_3$, dans laquelle x est compris entre 1,3 et 1,4, par réaction d'une solution aqueuse de chlorure ferrique sur du fer divisé et une suspension de carbonate de strontium dans une solution de carbonate alcalin, caractérisé en ce que l'on met en présence à chaud sous agitation une solution de chlorure ferrique et une suspension de carbonate de strontium dans une solution de carbonate alcalin, en ce que l'on dissout du fer divisé dans le mélange obtenu, en ce que l'on maintient la solution obtenue au voisinage de l'ébullition jusqu'à précipitation complète de l'hexaferrite de strontium, en ce que l'on filtre à chaud la solution, lave le précipité recueilli, et le soumet à des opérations de séchage, de broyage et de traitement thermique pendant plusieurs heures à environ 850°C.

2. Procédé selon la revendication 1, caractérisé en ce qu'après le lavage du précipité filtré, on le soumet à un traitement thermique à 850°C ± 5°C pendant 8 à 10 heures, puis le broie.

3. Procédé selon la revendication 1, caractérisé en ce qu'après le lavage du précipité filtré, on le soumet à un séchage à environ 120°C, broie le gâteau séché, puis le soumet à un traitement thermique à 850°C ± 5°C de préférence pendant environ 6 heures.

4. Procédé selon l'une des revendications 1 à 3, caractérisé en ce que le carbonate alcalin est du carbonate de potassium.

5. Procédé selon l'une des revendications 1 à 4, caractérisé en ce que l'on introduit la solution de chlorure

4

ferrique dans le fond d'un récipient contenant la suspension de carbonate de strontium dans la solution de carbonate alcalin, en ralentissant la vitesse d'introduction lorsque la majeure partie de la solution de chlorure ferrique a été introduite.

6. Procédé selon l'une des revendications 1 à 5, caractérisé en ce que l'on effectue des lavages successifs à l'eau distillée du précipité filtré.

7. Procédé selon l'une des revendications 1 à 6, caractérisé en ce qe les proportions de chlorure ferrique et de fer divisé de départ sont telles que le rapport molaire $Fe^{3+}/Fe^{2+}$ dans la solution obtenue soit compris entre 1 et 2.

8. Procédé selon l'une des revendications 1 à 7, caractérisé en ce que les proportions de chlorure ferrique, de fer et de carbonate alcalin sont telles que le rapport molaire $Fe^{3+}/Sr^{2+}$ dans la solution obtenue soit compris entre 9 et 10.

9. Procédé selon l'une des revendications 1 à 8, caractérisé en ce que les proportions de carbonate alcalin, de chlorure ferrique et de fer sont telles que le carbonate alcalin soit en excès de 10% à 20% par rapport à la quantité stoechiométrique.

**Patentansprüche**

1. Verfahren zur Herstellung eines magnetischen Pulvers aus Strontiumhexaferrit gemäß der allgemeinen Formel xSrO, 6 $Fe_2O_3$, wobei x zwischen 1,3 und 1,4 liegt, und zwar durch Reaktion einer wässrigen Lösung von Ferrichlorid auf zerkleinertem Eisen und einer Strontiumkarbonatsuspension in einer Lösung von alkalischen Karbonat, dadurch gekennzeichnet, daß man im heißen Zustand unter Umrühren eine Ferrichloridlösung und eine Strontiumkarbonatsuspension in einer Lösung von alkalischem Karbonat zusammenbringt, daß man zerkleinertes Eisen in der erhaltenen Mischung auflöst, daß man die erhaltene Lösung bis zur vollständigen Ausfällung des Strontiumhexaferrits in der Nähe des Siedepunktes hält, und daß man die Lösung heiß filtert, den erhaltenen Niederschlag wäscht und ihn Operationen des Trocknens, Mahlens und der Wärmebehandlung während mehrerer Stunden bei etwa 850°C unterzieht.

2. Verfahren nach Anspruch 1, dadurch gekennzeichnet, daß nach dem Waschen des filtrierten Niederschlags dieser einer Wärmebehandlung bei 850 ± 5°C während 8 bis 10 Stunden unterzogen und dann zermahlen wird.

3. Verfahren nach Anspruch 1, dadurch gekennzeichnet, daß nach dem Waschen des filtrierten Niederschlags dieser einer Trocknung bei etwa 120°C unterzogen, der getrocknete Kuchen zermahlen und das Mahlgut einer Wärmebehandlung bei 850 ± 5°C, vorzugsweise während ungefähr 6 Stunden, unterzogen wird.

4. Verfahren nach einem der Ansprüche 1 bis 3, dadurch gekennzeichnet, daß das alkalische Karbonat Kaliumkarbonat ist.

5. Verfahren nach einem der Ansprüche 1 bis 4, dadurch gekennzeichnet, daß man die Ferrichloridlösung in den unteren Teil eines Gefäßes leitet, das die Strontiumkarbonatsuspension in der Lösung von alkalischem Karbonat enthält, wobei die Eintrittsgeschwindigkeit verlangsamt wird, wenn der größere Teil der Ferrichloridlösung eingeleitet worden ist.

6. Verfahren nach einem der Ansprüche 1 bis 5, dadurch gekennzeichnet, daß man aufeinanderfolgende Waschungen des filtrierten Niederschlags mit destilliertem Wasser durchführt.

7. Verfahren nach einem der Ansprüche 1 bis 6, dadurch gekennzeichnet, daß die Anfangsanteile des Ferrichlorids und des zerkleinerten Eisens so gewählt sind, daß das Molverhältnis von $Fe^{3+}/Fe^{2+}$ in der erhaltenen Lösung zwischen 1 und 2 liegt.

8. Verfahren nach einem der Ansprüche 1 bis 7, dadurch gekennzeichnet, daß die Anteile des Ferrichlorids, des Eisens und des alkalischen Karbonats so gewählt sind, daß das Molverhältnis von $Fe^{3+}/Sr^{2+}$ in der erhaltenen Lösung zwischen 9 und 10 liegt.

5

9. Verfahren nach einem der Ansprüche 1 bis 8, dadurch gekennzeichnet, daß die Anteile des alkalischen Karbonats, des Ferrichlorids und des Eisens so gewählt sind, daß das alkalische Karbonat einen Überschuß von 10 % bis 20 % relativ zur stöchiometrischen Menge aufweist.

**Claims**

1. A method of manufacturing a magnetic powder of strontium hexaferrite having the general formula xSrO, $6Fe_2O_3$, in which $\underline{x}$ lies in the range 1.3 to 1.4, by reacting an aqueous solution of ferric chloride on divided iron and a suspension of strontium carbonate in an alkaline carbonate solution, the method being characterized in that a solution of ferric chloride and a suspension of strontium carbonate are inserted while hot and with stirring into the alkaline carbonate solution, in that divided iron is dissolved in the resulting mixture, in that the solution obtained is kept close to boiling until strontium hexaferrite has completely precipitated, and in that the solution is filtered while hot, the collected precipitate is washed, and then subjected to operations of drying, grinding, and a heat treatment of several hours of at about 850°C.

2. A method according to claim 1, characterized in that after the filtered precipitate has been washed, it is subjected to heat treatment at $850 \pm 5°C$ for 8 to 10 hours, and is then ground.

3. A method according to claim 1, characterized in that after the filtered precipitate has been washed, it is subjected to drying at about 120°C, the dried cake is ground, and then subjected to heat treatment at $850 \pm 5°C$ for about 6 hours.

4. A method according to one of claims 1 to 3, characterized in that the alkaline carbonate is potassium carbonate.

5. A method according to one of claims 1 to 4, characterized in that the ferric chloride solution is fed to the bottom of a receptacle containing the suspension of strontium carbonate in the alkaline carbonate solution, with the speed of feeding being slowed down once the major portion of the ferric chloride solution has been introduced.

6. A method according to one of claims 1 to 5, characterized in that the filtered precipitate is subjected to successive washing operations using distilled water.

7. A method according to one of claims 1 to 6, characterized in that the starting proportions of ferric chloride and of divided iron are such that the molar ratio of $Fe^{3+}/Fe^{2+}$ in the resulting solution lies in the range 1 to 2.

8. A method according to one of claims 1 to 7, characterized in that in that the proportions of ferric chloride, of iron, and of alkaline carbonate are such that the molar ratio of $Fe^{3+}/Sr^{2+}$ in the resulting solution lie in the range 9 to 10.

9. A method according to claims 1 to 8, characterized in that the proportions of alkaline carbonate, of ferric chloride, and of iron are such that the alkaline carbonate is in excess by 10% to 20% relative to the stoichiometric quantity.